## Europäisches Patentamt
## European Patent Office
## Office européen des brevets

(11) Veröffentlichungsnummer: **0 054 170 B1**

(12) **EUROPÄISCHE PATENTSCHRIFT**

(45) Veröffentlichungstag der Patentschrift:
29.05.85

(51) Int. Cl.⁴: **G 02 B 26/10, G 02 B 27/00**

(21) Anmeldenummer: 81109318.6

(22) Anmeldetag: 30.10.81

(54) Verfahren zur Korrektur der Positionsfehler eines Vielflächen-Drehspiegels.

(30) Priorität: 11.12.80 DE 3046584

(43) Veröffentlichungstag der Anmeldung:
23.06.82 Patentblatt 82/25

(45) Bekanntmachung des Hinweises auf die Patenterteilung:
29.05.85 Patentblatt 85/22

(84) Benannte Vertragsstaaten:
AT BE CH FR GB IT LI NL SE

(56) Entgegenhaltungen:
DE - A - 2 927 101
DE - A - 3 004 355
DE - B - 2 511 716
GB - A - 2 005 440

(73) Patentinhaber: DR.-ING. RUDOLF HELL GmbH,
Grenzstrasse 1-5, D-2300 Kiel 14 (DE)

(72) Erfinder: Jürgensen, Heinrich, Dütschfeldredder 22,
D-2301 Raisdorf (DE)
Erfinder: Zelenka, Thomas, Turnstrasse 4, D-2300 Kiel
(DE)

BUNDESDRUCKEREI BERLIN

## Beschreibung

Die vorliegende Erfindung bezieht sich auf das Gebiet der elektronischen Reproduktionstechnik, insbesondere auf ein Verfahren zur Korrektur der Positionsfehler eines durch ein Ablenksystem mit mindestens einer Spiegelfläche punkt- und zeilenweise über eine Fläche abgelenkten Lichtstrahls, welche sich quer zur Ablenkrichtung relativ zum Ablenksystem bewegt, bei dem Positionsfehler festgestellt und diese durch entsprechende Korrekturwerte korrigiert werden.

Lichtstrahl-Ablenksysteme finden in der Reproduktionstechnik beispielsweise zur punkt- und zeilenweisen Vorlagen-Abtastung oder zur Informations-Aufzeichnung Anwendung.

Im Falle der Abtastung wird ein Lichtstrahl mittels eines Vielflächen-Drehspiegels punkt- und zeilenweise über eine Vorlage abgelenkt. Das von der Vorlage reflektierte Abtastlicht wird von einem optoelektronischen Wandler in ein Bildsignal umgewandelt.

Im Falle der Informations-Aufzeichnung wird der Lichtstrahl in Abhängigkeit eines Bildsignals intensitätsmoduliert und mittels eines Vielflächen-Drehspiegels punkt- und zeilenweise über ein Aufzeichnungsmedium (Film) abgelenkt. Vorlage oder Aufzeichnungsmedium bewegen sich kontinuierlich oder schrittweise quer zur Ablenkrichtung des Lichtstrahls.

Für eine gute Reproduktionsqualität wird unter anderem gefordert, daß die Zeilenabstände gleich sind, sowie Zeilenanfänge und Zeilenenden jeweils genau untereinander liegen. Aufgrund optisch-geometrischer Fehler des Vielflächen-Drehspiegels und der dadurch bedingten Positionsfehler des Lichtstrahls auf der Fläche wird die Reproduktionsqualität aber erheblich beeinträchtigt.

Ursache dieser Fehler sind z. B. Toleranzen bei der Herstellung des Vielflächen-Drehspiegels und Mängel im Aufbau der Anordnung. Nicht parallel zur Drehachse des Vielflächen-Drehspiegels ausgerichtete Spiegelflächen und eine instabile Lage der Drehachse verursachen auf der Fläche Positionsfehler quer zur Ablenkrichtung des Lichtstrahls, die ungleichmäßige Zeilenabstände zur Folge haben.

Unterschiedliche Winkel zwischen aneinanderstoßenden Spiegelflächen führen dazu, daß Zeilenanfänge und Zeilenenden nicht übereinstimmen.

Die Praxis hat gezeigt, daß sich auch nicht ebene oder nicht plane Spiegelflächen störend bemerkbar machen, wenn eine sehr hohe Genauigkeit erreicht werden soll. Durch unebene Spiegelflächen werden die Positionsfehler quer zur Ablenkrichtung abhängig von der Ablenkrichtung des Lichtstrahls bzw. von der Zeilenrichtung. In Zeilenrichtung hat der Lichtstrahl dadurch eine ungleichförmige Winkelgeschwindigkeit wie auch bei einer nicht konstanten Rotationsgeschwindigkeit des Vielflächen-Drehspiegels, wodurch Verzerrungen innerhalb der Zeilen auftreten. Hinzu kommt, daß sich die beschriebenen Fehler durch thermische Effekte oder durch Alterung ändern können.

Aus der US-PS 4 002 830 ist bereits eine Korrekturanordnung für die Positionsfehler eines Vielflächen-Drehspiegels bekannt, bei der im Strahlengang zwischen Lichtquelle und Vielflächen-Drehspiegel ein Korrektur-Ablenker angeordnet ist. Bei dieser Anordnung ist jeder Spiegelfläche nur ein Korrekturwert zugeordnet. Maßnahmen zur Messung der Positionsfehler und zur Erzeugung von Korrekturwerten sind nicht angegeben.

Aus der DE-OS 2 927 101 ist eine weitere Korrekturanordnung bekannt, bei der die Positionsfehler quer zur Ablenkrichtung durch einen Ablenker und die Positionsfehler in Ablenkrichtung durch Drehzahlregelung des Vielflächen-Drehspiegels korrigiert werden. Auch bei dieser Anordnung wird für jede Spiegelfläche nur ein Korrekturwert erzeugt.

Die bekannten Korrekturanordnungen haben den Nachteil, daß durch unebene Spiegelflächen bedingte Fehler nicht korrigiert werden.

Aufgabe der vorliegenden Erfindung ist es daher, ein Verfahren zur Korrektur der Positionsfehler anzugeben, bei dem die Genauigkeit der Fehlermessung und Korrektur so gesteigert ist, daß auch durch nicht plane Spiegelflächen bedingte Fehler korrigiert werden und somit eine hohe Reproduktionsqualität erreichbar ist.

Diese Aufgabe wird durch die im kennzeichnenden Teil des Anspruchs 1 angegebenen Merkmale gelöst. Vorteilhafte Weiterbildungen sind in den Unteransprüchen angegeben.

Die Erfindung wird im folgenden anhand der Fig. 1—7 näher erläutert. Es zeigt

Fig. 1 eine Aufzeichnungseinrichtung mit Korrekturanordnung,

Fig. 2 ein Ausführungsbeispiel für eine Meßanordnung und eine Y-Meßstufe,

Fig. 3 eine graphische Darstellung,

Fig. 4 ein Ausführungsbeispiel einer X-Meßstufe,

Fig. 5 ein Ausführungsbeispiel für einen Korrekturwert-Geber,

Fig. 6 die Aufzeichnungseinrichtung mit einem weiteren Ausführungsbeispiel für eine Korrekturschaltung,

Fig. 7 die Aufzeichnungseinrichtung mit einem anderen Ausführungsbeispiel der Korrekturanordnung.

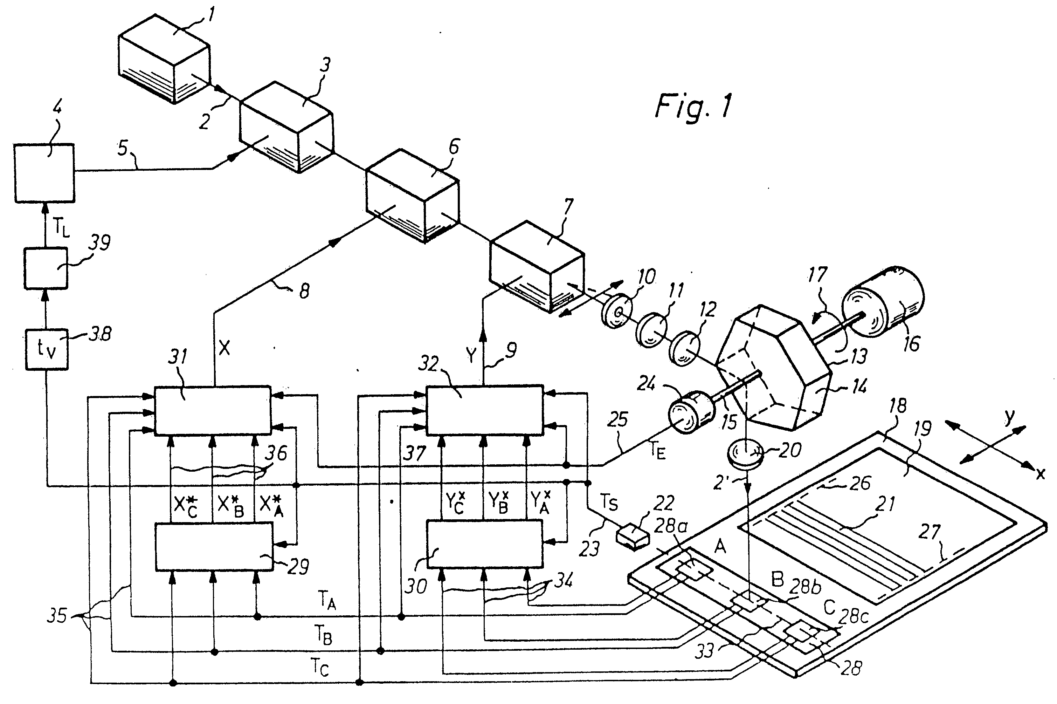

Fig. 1 zeigt eine Aufzeichnungsanordnung mit einem Lichtstrahl-Ablenksystem in Form eines Vielflächen-Drehspiegels zur zeilenweisen Aufzeichnung von Informationen und eine Korrekturanordnung für die durch den Vielflächen-Drehspiegel verursachten Positionsfehler des Lichtstrahls.

Eine Lichtquelle 1, z. B. ein Laser-Generator, erzeugt einen Lichtstrahl 2, der in einem Lichtmodulator 3 in Abhängigkeit von Aufzeichnungsdaten intensitätsmoduliert wird. Der Lichtmodulator 3 ist beispielsweise ein akusto-optischer Modulator (AOM) vom Typ 1201 C der Firma Isomet. Die Aufzeichnungsdaten werden von einem Speichermedium, z. B. einem Digitalspeicher 4, abgerufen und dem Lichtmodulator 3 über eine Leitung 5 zugeführt. Der intensitätsmodulierte Lichtstrahl 2 wird in einem X-Korrekturglied 6 und in einem nachgeschalteten Y-Korrekturglied 7 zwecks Korrektur der Positionsfehler aus der optischen Achse ausgelenkt. Als Korrekturglieder 6 und 7, die durch Korrekturwerte auf Leitungen 8 und 9 gesteuert werden, können Lichtablenker, z. B. akusto-optische Ablenker vom Typ LD 50 der Firma Isomet oder jede andere Form von Lichtablenkern, verwendet werden. Zur Intensitätsmodulation und Ablenkung des Lichtstrahls kann auch ein einziger akusto-optischer Modulator verwendet werden. Der korrigierte Lichtstrahl 2 fällt durch eine Lochblende 10 zur Ausschaltung parasitärer Lichtstrahlen und Linsen 11 und 12 zur Aufweitung des Lichtstrahls 2 auf einen rotierenden Vielflächen-Drehspiegel 13 (Polygon-Drehspiegel) mit n Spiegelflächen 14, deren Drehachse 15 senkrecht zur optischen Achse des Lichtstrahls 2 ausgerichtet ist. Im Ausführungsbeispiel weist der Vielflächen-Drehspiegel 13 n = 6 Spiegelflächen 14 auf. Ein Motor 16 treibt den Vielflächen-Drehspiegel 13 in Richtung eines Pfeils 17 mit konstanter Winkelgeschwindigkeit an. Auf einem Flachbett-Aufzeichnungsträger 18 ist ein Aufzeichnungsmedium 19 z. B. in Form eines Films angeordnet. Durch die Rotation des Vielflächen-Drehspiegels 13 wird der von den Spiegelflächen 14 reflektierte und durch ein Objektiv 20 auf das Aufzeichnungsmedium 19 fokussierte Lichtstrahl 2' laufend in X-Richtung (Zeilenrichtung) über das Aufzeichnungsmedium 19 ausgelenkt. Gleichzeitig führt der Flachbett-Aufzeichnungsträger 18 eine senkrecht zur Aufzeichnungsrichtung gerichtete schrittweise oder kontinuierliche Vorschubbewegung in Y-Richtung (Vorschubrichtung) aus. Auf diese Weise belichtet der abgelenkte Lichtstrahl 2' auf dem Aufzeichnungsmedium 19 nebeneinanderliegende Zeilen 21. In (Vorschubrichtung) aus. Auf diese Weise belichtet der abgelenkte Lichtstrahl 2' auf dem Aufzeichnungsdmedium 19 nebeneinanderliegende Zeilen 21. In der dargestellten Ausführungsform des Vielflächen-Drehspiegels 13 mit n = 6 Spiegelflächen 14 werden während einer Spiegelumdrehung somit sechs Zeilen 21 aufgezeichnet.

Ein außerhalb des Flachbett-Aufzeichnungsträgers 18 und in der Ablenkebene des Lichtstrahls 2' angeordneter opto-elektronischer Impulsgeber 22 erzeugt bei jedem einfallenden Lichtstrahl einen Startimpuls $T_S$ auf einer Leitung 23, also bei n = 6 Spiegelflächen 14 sechs Startimpulse $T_S$ pro Spiegelumdrehung. Ein weiterer Impulsgeber 24, der mit der Drehachse 15 des Vielflächen-Drehspiegels 13 gekoppelt ist, erzeugt jeweils nach einer Spiegelumdrehung einen Endimpuls $T_E$ auf einer Leitung 25.

Wie bereits in der Beschreibungseinleitung erwähnt, verursachen nicht parallel zur Drehachse 15 ausgerichtete Spiegelflächen 14 und eine instabile Lage der Drehachse 15 auf dem Aufzeichnungsmedium 19 Positionsabweichungen des aufzeichnenden Lichtstrahls 2' senkrecht zur Aufzeichnungsrichtung, die im folgenden kurz mit Y-Positionsfehler bezeichnet werden sollen. Diese Y-Positionsfehler, die durch unebene Spiegelflächen 14 abhängig von der Aufzeichnungsrichtung sind, haben ungleiche Zeilenabstände zur Folge. Unterschiedliche Winkel zwischen aneinanderstoßenden Spiegelflächen 14 verursachen von Zeile zu Zeile unterschiedliche Zeilenanfänge und Zeilenenden. Unebenheiten in den Spiegelflächen 14 führen zu Abweichungen des aufzeichnenden Lichtstrahls 2' von denjenigen Positionen in Zeilenrichtung, die er eigentlich zu bestimmten Zeiten einnehmen sollte, d. h., zu einer ungleichförmigen Winkelgeschwindigkeit des Lichtstrahls. Diese Abweichungen, im folgenden kurz X-Positionsfehler genannt, haben Verzerrungen innerhalb der Zeilen zur Folge.

Für eine gute Aufzeichnungsqualität wird aber gefordert, daß die Zeilen 21 auf einer gedachten Linie 26 beginnen, die senkrecht zur Aufzeichnungsrichtung verläuft, und auf einer dazu parallelen Linie 27 enden und daß die Zeilenabstände konstant sind. Diese Forderungen lassen sich ohne eine Korrektur der genannten Positionsfehler nicht erfüllen.

Die erfindungsgemäße Korrekturanordnung für die Positionsfehler des Vielflächen-Drehspiegels 13 besteht aus einer Meßeinrichtung 28, einer X-Meßstufe 29, einer Y-Meßstufe 30, einem X-Korrekturwert-Geber 31 und einem Y-Korrekturwert-Geber 32 sowie aus dem X-Korrekturglied 6 und dem Y-Korrekturglied 7 im Strahlengang zwischen Lichtquelle 1 und Vielflächen-Drehspiegel 13.

Die Meßeinrichtung 28 in Form einer Meßschiene weist innerhalb der Nutzungsbreite des Flachbett-Aufzeichnungsträgers 18 eine Anzahl von auf einer Referenzlinie 33 nebeneinander angeordneter Meßorgane zur Feststellung der Strahlabweichung in X- und Y-Richtung auf. Im Ausführungsbeispiel sind drei Meßorgane 28a, 28b und 28c an den Meßpunkten A, B und C vorgesehen, wobei das Meßorgan 28a im Bereich des Zeilenbeginns, das Meßorgan 28c im Bereich des Zeilenendes und das Meßorgan 28b etwa in der Zeilenmitte angeordnet ist.

Die Meßeinrichtung 28 ist fester Bestandteil des Flachbett-Aufzeichnungsträgers 18. Alternativ kann die Meßeinrichtung 28 zur Messung auf dem Flachbett-Aufzeichnungsträger 18 angebracht oder anstelle des Flachbett-Aufzeichnungsträgers 18 in den Strahleneingang eingeschoben werden.

Zur Bestimmung der Positionsfehler in einer vor der Aufzeichnung liegenden Meßphase, in welcher der Vielflächen-Drehspiegel 13 rotiert, wird der Flachbett-Aufzeichnungsträger 18 soweit in Y-Richtung verschoben, daß die Meßorgane 28a, 28b und 28c, wie in Fig. 1 dargestellt, in der Ablenkebene des Lichtstrahls 2' liegen. Die in den einzelnen Meßpunkten A, B und C entlang der Aufzeichnungsrichtung von den Meßorganen 28a, 28b und 28c gemessenen Y-Positionsfehler werden über Doppelleitungen 34 an die Y-Meßstufe 30 übertragen und dort in die Meßwert-Tripel $Y^*_A$, $Y^*_B$ und $Y^*_C$ für jede Spiegelfläche 14 umgesetzt.

Zur Bestimmung der X-Positionsfehler werden für den Lichtstrahl 2' Laufzeitdifferenz-Messungen zwischen dem Impulsgeber 22 und dem Meßorgan 28a ($\Delta t_1$), zwischen den Meßorganen 28a und 28b ($\Delta t_2$) sowie zwischen den Meßorganen 28b und 28c ($\Delta t_3$) durchgeführt. Die in dem Impulsgeber 22 und den Meßorganen 28a, 28b und 28c bei Überstreichen des Lichtstrahls 2' gemessenen Impulse werden der X-Meßstufe 29 über die Leitung 23 und die Leitungen 35 zugeführt und dort zur Zeitdifferenzmessung verwendet. Die gemessenen Zeitdifferenzen $\Delta t_1$, $\Delta t_2$ und $\Delta t_3$ werden in die Meßwert-Tripel $X^*_A$, $X^*_B$ und $X^*_C$ für jede Spiegelfläche 14 umgesetzt.

In einer sich an die Meßphase anschließenden Korrekturphase erzeugen der X-Korrekturwert-Geber 31 und der Y-Korrekturwert-Geber 32 in Richtung der erforderlichen Korrektur ansteigende Korrekturwert-Tripel $X_A$, $X_B$ und $X_C$ sowie $Y_A$, $Y_B$ und $Y_C$, die seriell und in Übereinstimmung mit den sich gerade im Strahlengang befindlichen Spiegelflächen 14 über die Leitungen 8 und 9 an das X-Korrekturglied 6 und an das Y-Korrekturglied 7 gegeben werden. Die Korrekturglieder 6 und 7 korrigieren schrittweise die Positionsfehler, wobei der Korrekturvorgang laufend mittels der Meßeinrichtung 28 überprüft wird. Dazu werden jeweils diejenigen Meßwert-Tripel $X^*_A$, $X^*_B$ und $X^*_C$ sowie $Y^*_A$, $Y^*_B$ und $Y^*_C$, die der momentan im Strahlengang befindlichen Spiegelfläche 14 zugeordnet sind, über Leitungen 36 und 37 an den X-Korrekturwert-Geber 31 und den Y-Korrekturwert-Geber 32 übertragen.

Die Übertragung der Meßwert-Tripel an die Korrekturwert-Geber 31 und 32 und der Korrekturwert-Tripel an die Korrekturglieder 6 und 7 in Synchronismus mit der Rotation des Vielflächen-Drehspiegels 13 wird durch die Startimpulse $T_S$ auf der Leitung 23 und durch die Endimpulse $T_E$ auf der Leitung 25 gesteuert.

Die schrittweise Korrektur der Positionsfehler wird so lange fortgesetzt, bis die gemessenen Abweichungen kompensiert sind. Die dabei erreichten Korrekturwerte werden in den entsprechenden Korrekturwert-Gebern 31 und 32 gespeichert und während der eigentlichen Aufzeichnungsphase zur fortlaufenden Korrektur der Positionsfehler ausgegeben.

Der Korrekturwertbereich möge zwischen $Y = 0$ und $Y = Y_m$ liegen, wobei dem Korrekturwert $Y = 0$ die maximale Ablenkung des Lichtstrahls in $-Y$-Richtung, dem Korrekturwert $Y = Y_m$ die maximale Ablenkung in $+Y$-Richtung und dem Korrekturwert $Y_m/2$ die Nullablenkung zugeordnet ist.

In der Aufzeichnungsphase werden die Startimpulse $T_S$ in einer Verzögerungsstufe 38 um diejenige Zeit verzögert, die der Laufzeit des Lichtstrahls 2' zwischen dem Impulsgeber 22 und dem gewünschten Zeilenbeginn auf dem Aufzeichnungsmedium 19 entspricht.

Ein Taktgenerator 39 erzeugt den Lesetakt für den Digitalspeicher 4. Jeder verzögerte Startimpuls $T_S$ startet erneut den Lesetakt, so daß jeweils die erste Bildinformation einer Zeile genau beim gewünschten Zeilenstart ausgelesen und aufgezeichnet wird.

In einer vorteilhaften Weiterbildung weist der X-Korrekturwert-Geber 31 und der Y-Korrekturwert-Geber 32 je eine Interpolationsstufe auf, in denen aus jedem Korrekturwert-Tripel $X_A$, $X_B$ und $X_C$ bzw. $Y_A$, $Y_B$ und $Y_C$ durch lineare Interpolation eine Korrekturfunktion $X = f(x)$ bzw. $Y = f(x)$ für jede Spiegelfläche 14 gebildet wird, so daß für jeden Auftreffpunkt des Lichtstrahls 2' ein Korrekturwert definiert ist.

Das erfindungsgemäße Korrekturverfahren hat somit den Vorteil, daß eine kontinuierliche Ablenkkorrektur innerhalb jeder Spiegelfläche 14 stattfindet, wodurch insbesondere durch nicht ebene oder nicht plane Spiegelflächen verursachte Fehler kompensiert und hohe Genauigkeiten erreicht werden.

Es liegt im Rahmen der Erfindung, daß die beschriebene Korrekturanordnung auch bei einer Vorlagen-Abtasteinrichtung oder bei anderen Lichtstrahl-Ablenksystemen Verwendung finden kann.

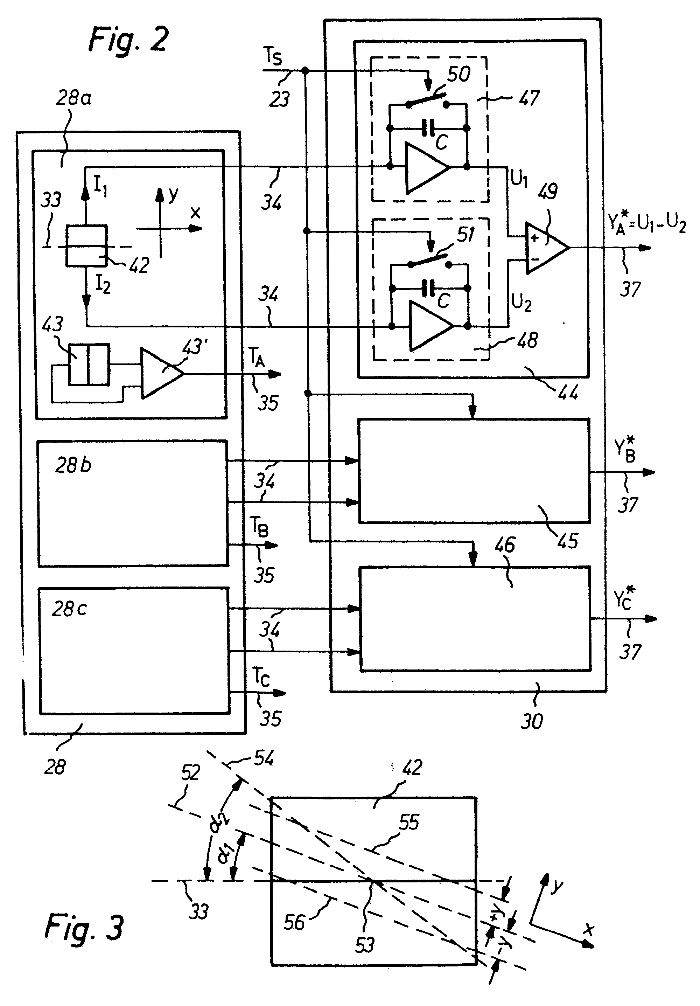

Fig. 2 zeigt ein Ausführungsbeispiel für die Meßeinrichtung 28 im Zusammenwirken mit der Y-Meßstufe 30. Die Meßeinrichtung 28 weist wie in Fig. 1 gezeigt, drei identische Meßorgane 28a, 28b und 28c auf, von denen in Fig. 2 nur das Meßorgan 28a ausführlich dargestellt ist.

Das Meßorgan 28a enthält einen ersten Sensor 42 zur Messung der Y-Positionsfehler und einen zweiten Sensor 43 zur Messung der X-Positionsfehler. Die Sensoren bestehen beispielsweise aus je zwei einzelnen Fotodioden oder einer Differential-Fotodiode. Die lichtempfindlichen Flächen des Sensors 42 sind parallel und die des Sensors 43 senkrecht zur Referenzlinie 33 ausgerichtet. Anstelle der Fotodioden können auch Positionsdetektoren mit einem hochohmigen lichtempfindlichen Material verwendet werden.

Den Sensoren 42 sind in der Y-Meßstufe 30 identisch aufgebaute Auswertestufen 44, 45 und 46 zugeordnet, so daß wiederum nur die Auswertestufe 44 ausführlich dargestellt ist.

Die durch den einfallenden Lichtstrahl erzeugten Fotoströme $I_1$ und $I_2$ des Sensors 42 gelangen über die Doppelleitung 34 auf Integratoren 47 und 48. Die sich an den Ausgängen der Integratoren 47 und 48 ergebenen Spannung $U_1$ und $U_2$ werden einer Differenzstufe 49 zugeführt, in welcher der Meßwert $Y^*_A = U_1 - U_2$ erzeugt wird.

Die Integratoren 47 und 48 sind aus Operationsverstärkern aufgebaut, die über Kondensatoren C rückgekoppelt sind. Den Kondensatoren C sind elektronische Schalter 50 und 51 parallel geschaltet, die in der Darstellung durch mechanische Schalter symbolisiert sind. Die Schalter werden jeweils vom Startimpuls $T_S$ auf der Leitung 23 geschlossen und die Kondensatoren C entladen, so daß der Meßwert einer Spiegelfläche 14 gelöscht wird, bevor der entsprechende Meßwert der nachfolgenden Spiegelfläche 14 festgestellt wird. ·

Die Integration der Fotoströme $I_1$ und $I_2$ führt zu einer großen Meßgenauigkeit, da das Rauschen der kleinen Fotoströme eliminiert wird und eine exakte Ausrichtung der Meßorgane entfallen kann.

Die Fotoströme des Sensors 43 werden auf einen Komparator 43' gegeben, der beim Durchgang des Lichtstrahls durch den Sensor 43 einen Impuls $T_A$ erzeugt. Der Impuls $T_A$ wird zusammen mit den Impulsen $T_B$ und $T_C$ über die Leitungen 35 ausgegeben.

Die Messung der Y-Positionsfehler wird durch die Fig. 3 verdeutlicht, in der noch einmal der Sensor 42 mit den parallel zur Referenzlinie 33 ausgerichteten lichtempfindlichen Flächen der Differential-Fotodiode und verschiedene Lichtstrahl-Bahnen dargestellt sind. Die Lichtstrahl-Bahn 52 soll in Aufzeichnungsrichtung oder Y-Richtung unter einem Winkel $\alpha_1$ zur Referenzlinie 33 durch den Flächenmittelpunkt 53 verlaufen. Der Winkel $\alpha_1$ möge durch eine nicht exakte Ausrichtung der Differential-Fotodiode bzw. der Referenzlinie 33 zur Y-Richtung entstanden sein. Die von den Flächen jeweils aufgenommene Lichtenergiemenge ist gleich ($I_1 = I_2$), und der Meßwert $Y = 0$, d. h. die Lichtstrahl-Bahn 52, entspricht der Sollbahn ohne Positionsfehler. Auch bei der unter einem Winkel $\alpha_2$ durch den Flächenmittelpunkt 53 verlaufenden Lichtstrahl-Bahn 54 ergibt sich der Meßwert $Y = 0$. Daraus wird ersichtlich, daß eine exakte Ausrichtung der Differential-Fotodiode zur Y-Richtung entfallen kann. Die Lichtstrahl-Bahnen 55 und 56 weisen dagegen Positionsfehler $\pm y$ auf. In diesem Fall ist die von den Flächen jeweils aufgenommene Lichtenergiemenge ungleich ($I_1 \neq I_1$) und der Meßwert Y dem Positionsfehler proportional.

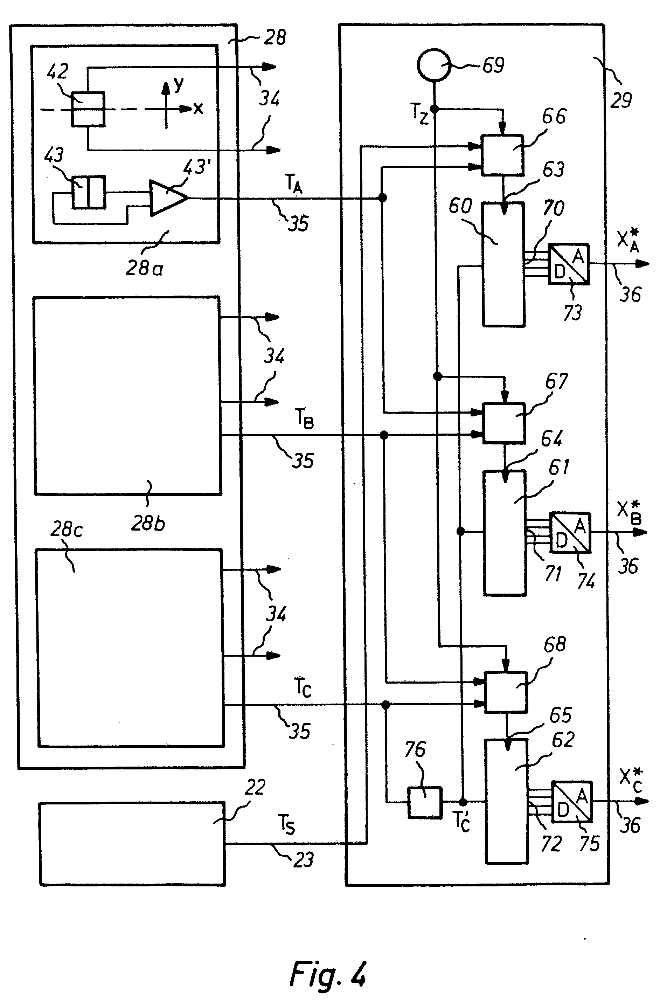

Fig. 4 zeigt ein Ausführungsbeispiel der X-Meßstufe 29 in Verbindung mit dem Impulsgeber 22 und der Meßeinrichtung 28.

Für die Zeitdifferenz-Messung sind in der X-Meßstufe 29 drei Digitalzähler 60, 61 und 62 vorhanden, deren Takteingänge 63, 64 und 65 über Torschaltungen 66, 67 und 68 mit einem Taktgenerator 69 zur Erzeugung einer Zähltaktfolge $T_Z$ verbunden sind. Die Zähltaktfolge $T_Z$ wird mittels der Torschaltungen 66, 67 und 68 von den im Impulsgeber 22 erzeugten Startimpulsen $T_S$ und von den mittels der Sensoren 43 in den Meßorganen 28a, 28b und 28c erzeugten Impulsen $T_A$, $T_B$ und $T_C$ ein- und ausgeschaltet, so daß die jeweiligen Zählerstände Z proportional den Zeitdifferenzen $\Delta t_1$, $\Delta t_2$ und $\Delta t_3$ zwischen den einschaltenden und ausschaltenden Impulsen sind. An die Ausgänge 70, 71 und 72 der Digitalzähler 60, 61 und 62 sind D/A-Wandler 73, 74 und 75 angeschlossen, in denen die Zählerstände Z in die den gemessenen Zeitdifferenzen $\Delta t_1$, $\Delta t_2$ und $\Delta t_3$ proportionalen analogen Meßwert-Tripel $X^*_A$, $X^*_B$ und $X^*_C$ für jede Spiegelfläche 14 umgesetzt werden. Die Digitalzähler 60, 61 und 62 werden jeweils am Ende einer Spiegelfläche 14 von dem in einer Verzögerungsstufe 76 verzögerten Impuls $T'_C$ zurückgesetzt, so daß die Digitalzähler zur Zeitdifferenz-Messung für die nachfolgende Spiegelfläche vorbereitet sind.

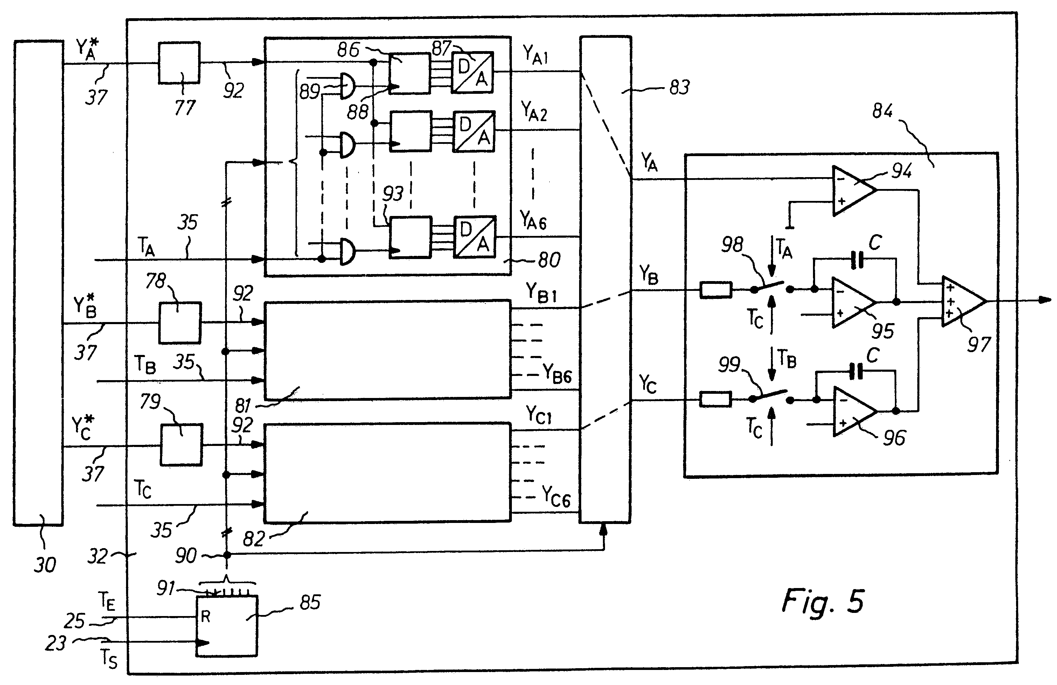

Fig. 5 zeigt ein Ausführungsbeispiel für den Y-Korrekturwert-Geber 32 bzw. für den X-Korrekturwert-Geber 31, welche identisch aufgebaut sind.

Der Y-Korrekturwert-Geber 32 besteht aus drei Komparatoren 77, 78 und 79, drei Speicherstufen 80, 81 und 82, einer Verteilerschaltung 83, einer Interpolationsstufe 84 und einem Spiegelflächen-Zähler 85.

Die Speicherstufen 80, 81 und 82 erzeugen während der Korrekturphase die Korrekturwerte für die Spiegelflächen 14 und speichern die bei Kompensation der Y-Positionsfehler erreichten Werte für die spätere Aufzeichnung. Die Speicherstufe 80 erzeugt und speichert die Korrekturwerte für den Meßpunkt A, und zwar im Ausführungsbeispiel für $n = 6$ Spiegelflächen die Korrekturwerte $Y_{A1}$ bis $Y_{A6}$, die Speicherstufe 81 die Korrekturwerte $Y_{B1}$ bis $Y_{B6}$ für den Meßpunkt B und die Speicherstufe 82 die Korrekturwerte $Y_{C1}$ bis $Y_{C6}$ für den Meßpunkt C.

Die Speicherstufen 80, 81 und 82 sind identisch aufgebaut, so daß in Fig. 5 nur die Speicherstufe 80 detaillierter dargestellt ist. Die Speicherstufe 80 besteht aus sechs Vorwärts/Rückwärts-Zählern 86 mit nachgeschalteten D/A-Wandlern 87. Den Takteingängen 88 der Vorwärts/Rückwärts-Zähler 86 sind Und-Tore 89 vorgeschaltet. Die Und-Tore 89 sind mit den Impulsen $T_A$ auf der Leitung 35, die jeweils beim Erscheinen des Lichtstrahls 2' an der Meßstelle A abgegeben werden, beaufschlagt. Die Und-Tore 89 werden von den sechs Ausgangssignalen des Spiegelflächen-Zählers 85 auf den Leitungen 90 gesteuert. In dem Spiegelflächen-Zähler 85 werden die Startimpulse $T_S$ auf der Leitung 23 zu Beginn einer jeden Spiegelfläche 14 eingezählt, so daß die Ausgangssignale an den Ausgängen 91 des Spiegelflächen-Zählers 85 die gerade im Lichtweg befindliche Spiegelfläche 14 kennzeichnen. Nach jeder Spiegelumdrehung wird der Spiegelflächen-Zähler 85 durch den Endimpuls $T_E$ auf der Leitung 25 rückgesetzt. Die von der Y-Meßstufe 30 erzeugten und mit Vorzeichen behafteten Meßwerte $Y^*_A$ werden in dem Komparator 77 in der Weise in logische Steuersignale umgesetzt, daß einem positiven Meßwert H-Pegel und einem negativen Meßwert L-Pegel zugeordnet wird. Die logischen Steuersignale auf den Leitungen 92 werden den Vorwärts/Rückwärts-Steuereingängen 93 der Vorwärts/Rückwärts-Zähler 86 zugeführt und bestimmen somit, ob die Takte $T_A$ in den Vorwärts/Rückwärts-Zähler 86 eingezählt oder aus diesem ausgezählt werden sollen.

Die Wirkungsweise der Speicherstufe 80 ist nun folgende.

Bei jedem Durchgang des Lichtstrahls 2' durch die Meßstelle A wird ein Impuls $T_A$ auf die Leitung 35 gegeben. Diejenigen Und-Tore 89, die den momentan im Strahlengang befindlichen Spiegelflächen 14 zugeordnet sind, werden durch die entsprechenden Ausgangssignale des Spiegelflächen-Zählers 85 zyklisch freigeschaltet. Die beim Durchgang des Lichtstrahls 2' durch den Meßpunkt A festgestellten positiven oder negativen Strahlabweichungen entscheiden, ob die durch die freigeschalteten Und-Tore 89 gelangenden Impulse $T_A$ in die betreffenden Vorwärts/Rückwärts-Zähler 86 ein oder aus ihm gezählt werden bzw. ob der Zählerstand erhöht oder erniedrigt wird, welcher mittels der D/A-Wandler 87 in höhere oder niedrigere Korrekturwerte Y umgesetzt werden. Beispielsweise wird in der Korrekturphase bei einer positiven Strahlabweichung mit jedem Impuls $T_A$ der Zählerstand um ein Bit und der entsprechende Korrekturwert somit schrittweise erhöht, mit dem die positive Strahlabweichung schließlich zu Null kompensiert wird. Der bei Kompensation erreichte Zählerstand ist der gespeicherte Korrekturwert für die Aufzeichnungsphase.

Zum seriellen und zyklischen Durchschalten der sechs Korrekturwert-Tripel $Y_A$, $Y_B$ und $Y_C$ für die sechs Spiegelflächen 14 an die Interpolationsstufe 84 in Synchronismus mit der jeweils im Strahlengang befindlichen Spiegelfläche 14 ist die Verteilerschaltung 83 vorgesehen, welche von den Ausgangssignalen des Spiegelflächen-Zählers 85 auf der Leitung 90 gesteuert wird. Gestrichelt angedeutet sind die Verbindungen für die erste Spiegelfläche 14, durch die das Korrekturwert-Tripel $Y_{A1}$, $Y_{B1}$ und $Y_{C1}$ an die Interpolationsstufe 84 gelangt.

Die Interpolationsstufe 84 besteht aus einem Verstärker 94, einem ersten Integrator 95, einem zweiten Integrator 96 und einem an den Verstärker 94 und die Integratoren 95 und 96 angeschlossenen Summierverstärker 97. Die Interpolationsstufe 84 bildet aus den Korrekturwert-Tripeln im Vorzeichen invertierte Korrekturfunktionen.

Der invertierende Eingang des Verstärkers 94 ist mit dem Korrekturwert $Y_A$ beaufschlagt, und der nichtinvertierende Eingang liegt auf Massepotential. Der invertierende Eingang des ersten Integrators 95 ist über einen elektronischen Schalter 98 mit dem Korrekturwert $Y_B$ und der nichtinvertierende Eingang des zweiten Integrators 96 über einen weiteren elektronischen Schalter 99 mit dem Korrekturwert $Y_C$ beaufschlagt. Die nichtinvertierenden Eingänge der beiden Integratoren 95 und 96 liegen auf dem Spannungswert $Y_m/2$.

Bei jeder Spiegelfläche werden der elektronische Schalter 98 vom Impuls $T_A$ und der elektronische Schalter 99 vom Impuls $T_B$ eingeschaltet, während jeweils der Impuls $T_C$ die Schalter 98 und 99 öffnet. Nicht dargestellte Schaltmittel, die von den Startimpulsen $T_S$ gesteuert werden, entladen die Kondensatoren C der Integratoren 95 und 96.

Die lineare Interpolation läuft an einem Beispiel wie folgt ab.

Die diskreten Korrekturwerte $Y_A$, $Y_B$ und $Y_C$ einer Spiegelfläche 14 mögen zu den Zeitpunkten $t_1$, $t_2$ und $t_3$ gebildet werden, in denen der Lichtstrahl jeweils die Meßpunkte A, B und C passiert. Zur Zeit $t_1$ wird der elektronische Schalter 98 durch den Impuls $T_A$ geschlossen und der Integrator 95 mit dem Korrekturwert $Y_B$ beaufschlagt und gestartet. Falls $Y_B < Y_A$ ist, erzeugt der Integrator 95 eine negative Ausgangsspannung, die in dem Summierverstärker 97 von dem Korrekturwert $Y_A$ subtrahiert wird, bis am Zeitpunkt $t_2$ der Korrekturwert $Y_B$ erreicht ist. Zum Zeitpunkt $t_2$ wird der elektronische Schalter 99 geschlossen und der Integrator 96 mit dem Korrekturwert $Y_C$ beaufschlagt und gestartet.

Falls diesmal $Y_C > Y_B$ ist, erzeugt der Integrator 96 jetzt eine positive Ausgangsspannung, die zu dem Korrekturwert $Y_B$ hinzuaddiert wird, bis zum Zeitpunkt $t_3$ der Korrekturwert $Y_C$ erreicht ist.

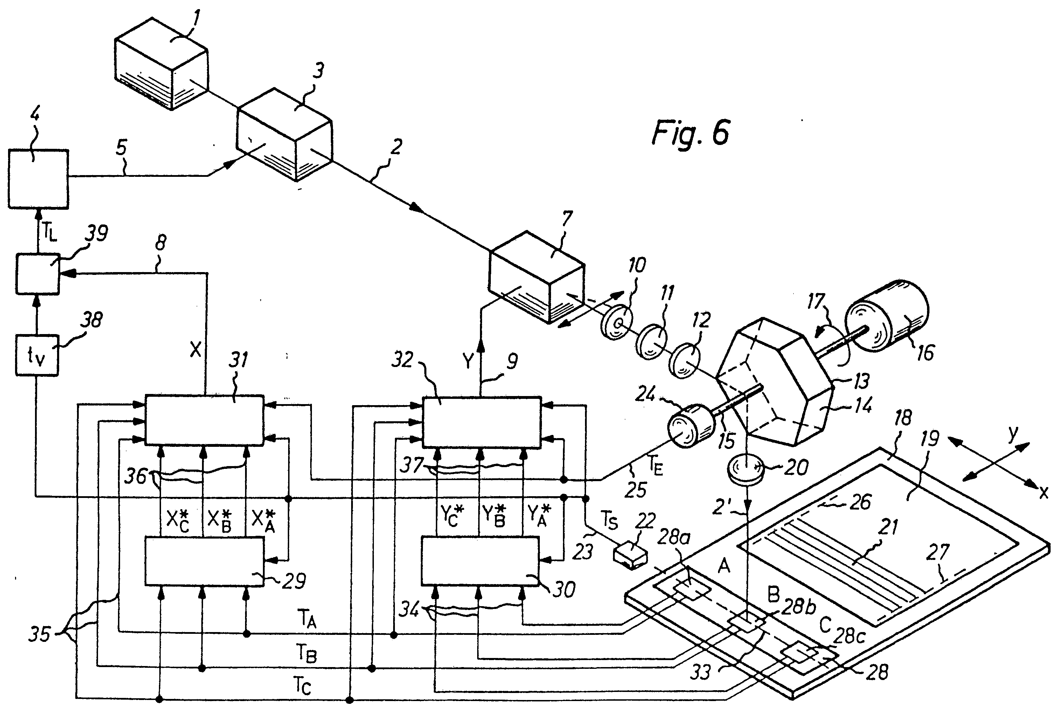

Fig. 6 zeigt eine Variante der Korrektur-Anordnung nach Fig. 1. Der Unterschied zu Fig. 1 besteht darin, daß die Fehlerkorrektur in X-Richtung des Aufzeichnungsmediums 19 nicht durch Ablenkung des Lichtstrahls in X-Richtung erfolgt, sondern durch eine entsprechende Ausgabe-Steuerung der Aufzeichnungsdaten aus dem Digitalspeicher 4. Somit entfällt das X-Korrekturglied 6 zwischen dem Lichtmodulator 3 und dem Y-Korrekturglied 7.

Die aus dem X-Korrekturwert-Geber 31 ausgegebenen X-Korrekturwerte gelangen jetzt über die Leitung 8 in den Taktgenerator 39 und steuern die Frequenz der Lesetaktfolge $T_L$ für den Digitalspeicher 4.

Die Frequenzsteuerung erfolgt in der Weise, daß die Zeitabstände die Datenausgabe in Abhängigkeit der festgestellten X-Positionsfehler des Lichtstrahls 2' geändert und so die X-Positionsfehler durch eine entsprechende Stauchung oder Streckung der Zeilen kompensiert werden.

Alternativ zur Frequenzänderung der Lesetaktfolge $T_L$ kann auch ein durch die X-Korrekturwerte gesteuertes Verzögerungsglied zwischen Digitalspeicher 4 und Lichtmodulator 3 vorgesehen werden.

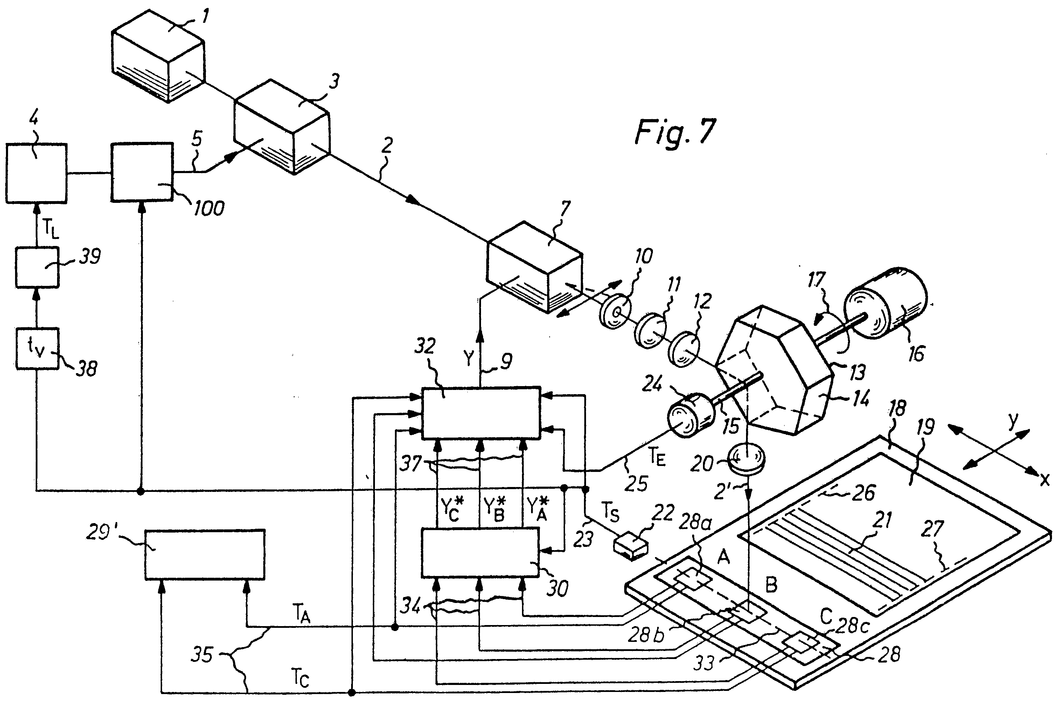

Fig. 7 zeigt eine gegenüber der Fig. 6 vereinfachte Korrektur-Anordnung, bei der auf eine selbsttätige Kompensation der X-Positionsfehler verzichtet wird.

Zwischen dem Digitalspeicher 4 und dem Lichtmodulator 3 ist ein mit Korrekturwerten programmierbares Laufzeitglied 100 angeordnet.

In einer vereinfachten Meßstufe 29' werden für alle Spiegelflächen 14 des Vielflächen-Drehspiegels 13 durch Zeitmessungen mit Hilfe der Impulse $T_A$ und $T_C$ zwischen den Meßpunkten A und C die zugehörigen Zeilenlängen z und daraus die zugehörigen Zeilenlängendifferenzen $\Delta z$ festgestellt. Die halben Zeilenlängendifferenzen $\Delta z/2$ werden für jede Spiegelfläche des Vielflächen-Drehspiegels als Korrekturwerte in das Laufzeitglied 100 einprogrammiert.

Während der Aufzeichnung werden die gespeicherten Korrekturwerte, gesteuert von den Startimpulsen $T_S$ auf der Leitung 23, in Synchronismus mit der Spiegelumdrehung aufgerufen und die aus dem Digitalspeicher 4 ausgelesenen Aufzeichnungsdaten in jeder Zeile und damit die aufzuzeichnende Zeile selbst in bezug auf die erste Zeile so verschoben, daß sich der betreffende Zeilenlängenfehler jeweils auf den Zeilenanfang und auf das Zeilenende verteilt.

**Patentansprüche**

1. Verfahren zur Korrektur der Positionsfehler eines durch ein Ablenksystem mit mindestens einer Spiegelfläche punkt- und zeilenweise über eine Fläche abgelenkten Lichtstrahls, welche sich quer zur Ablenkrichtung relativ zum Ablenksystem bewegt, bei dem Positionsfehler festgestellt und diese durch entsprechende Korrekturwerte korrigiert werden, dadurch gekennzeichnet,
daß vor dem eigentlichen Betrieb für jede Spiegelfläche eine Anzahl von Positionsfehlern in Ablenkrichtung (X-Positionsfehler) und senkrecht dazu (Y-Positionsfehler) an in Zeilenrichtung orientierten Meßpunkten im Bereich der Fläche gemessen werden,
daß zur Korrektur der Positionsfehler für jede Spiegelfläche Korrekturwerte erzeugt und unter gleichzeitiger Überprüfung der Positionsfehler so lange geändert werden, bis die Positionsfehler kompensiert sind,
daß die dabei gefundenen Korrekturwerte gespeichert werden und
daß zur laufenden Korrektur während des eigentlichen Betriebes, die den einzelnen Spiegelflächen zugeordneten und gespeicherten Korrekturwerte in Synchronismus mit der Bewegung des Ablenksystems ausgegeben werden.

2. Verfahren nach Anspruch 1, dadurch gekennzeichnet, daß die X-Positionsfehler und Y-Positionsfehler durch korrekturwertabhängige Ablenkungen des Lichtstrahls korrigiert werden.

3. Verfahren nach Anspruch 1, dadurch gekennzeichnet,
daß der Lichtstrahl zum Zweck einer zeilenweisen Aufzeichnung auf der Fläche in Abhängigkeit eines Bildsignals intensitätsmoduliert wird,
daß die Y-Positionsfehler durch eine gesteuerte Ablenkung des Lichtstrahls und die X-Positionsfehler zeilenweise durch eine gesteuerte Laufzeitänderung des Bildsignals korrigiert werden.

4. Verfahren nach Anspruch 1, dadurch gekennzeichnet,
daß der Lichtstrahl zum Zweck einer zeilenweisen Aufzeichnung auf der Fläche in Abhängigkeit von Bilddaten intensitätsmoduliert wird, die mittels eines Lesetaktes aus einem Speichermedium ausgelesen werden,
daß die Y-Positionsfehler durch eine gesteuerte Ablenkung des Lichtstrahls korrigiert werden und
daß zwecks zeilenweiser Korrektur der X-Positionsfehler die Frequenz des Lesetaktes geändert wird.

5. Verfahren nach einem der Ansprüche 1 bis 4, dadurch gekennzeichnet, daß das Auslesen der Bilddaten jeweils am Zeilenanfang mittels eines synchronisierenden Startimpulses gestartet wird.

6. Verfahren nach einem der Ansprüche 1 bis 4, dadurch gekennzeichnet, daß die Korrekturablenkung vor der zeilenweisen Ablenkung des Lichtstrahls durchgeführt wird.

7. Verfahren nach einem der Ansprüche 1 bis 6, dadurch gekennzeichnet, daß für jede Spiegelfläche aus den zugeordneten Korrekturwerten durch Interpolation eine Korrekturfunktion erzeugt wird.

8. Verfahren nach einem der Ansprüche 1 bis 7, dadurch gekennzeichnet, daß als Ablenksystem ein Vielflächen-Drehspiegel (Polygon-Spiegel) verwendet wird.

9. Verfahren nach einem der Ansprüche 1 bis 8, dadurch gekennzeichnet,
daß zur Bestimmung der Y-Positionsfehler jeweils ein fotoelektrisches Meßorgan mit zwei quer zur Ablenkrichtung angeordneten fotoempfindlichen Flächen verwendet wird und
daß die Fotoströme integriert und durch Differenzbildung der integrierten Fotoströme der Y-Positionsfehler ermittelt wird.

10. Verfahren nach Anspruch 9, dadurch gekennzeichnet, daß als Meßorgan eine Differential-Fotodiode verwendet wird.

11. Verfahren nach einem der Ansprüche 1 bis 8, dadurch gekennzeichnet, daß als Meßorgan ein Positionsdetektor mit einem hochohmigen lichtempfindlichen Material verwendet wird.

12. Verfahren nach einem der Ansprüche 1 bis 11, dadurch gekennzeichnet, daß die X-Positionsfehler durch Laufzeitdifferenz-Messungen des Lichtstrahls zwischen den Meßpunkten festgestellt werden.

13. Verfahren nach Anspruch 3 oder 4, dadurch gekennzeichnet, daß zur gleichzeitigen Intensitätsmodulation und Ablenkung des Lichtstrahls ein akusto-optischer Modulator verwendet wird.

**Claims**

1. Process for the correction of positional errors of a light beam deflected dot-by-dot and line-by-line across an area by means of a deflector system comprising at least one reflector surface, which is displaced transversely to the direction of deflection with respect to the deflector system, in which positional errors are detected and these are corrected by appropriate correction values, characterized
in that prior to actual operation, a number of positional errors is measured in the direction of deflection (X positional errors) and at right angles thereto (Y positional errors) at measuring points set in the line direction in the region of the area, for each reflector surface,
that for correction of the positional errors, correction values are generated for each reflector surface and are modified under simultaneous monitoring of the positional errors until the positional errors are cancelled,
that the modified correction values are stored
and that for current correction during actual operation, the stored correction values allocated to
the individual reflector surfaces are called up
synchronously with the displacement of the deflector system.

2. Process according to claim 1, characterized
in that the X-position errors and Y-position errors
are corrected by means of deflection of the light
beam which are a function of the correction values.

3. Process according to claim 1, characterized
in that the intensity of the light beam is modulated as a function of an image signal for the purpose of line-by-line recording on the area,
that the Y-positional errors are corrected by a
controlled deflection of the light beam and the
X-position errors are corrected line-by-line by a
controlled change of the transit time of the image signal.

4. Process according to claim 1, characterized
in that the light beam is modulated in its intensity
for the purpose of line-by-line recording on the
area, as a function of image data which are read
out of a storage medium by means of a read
cycle,
that the Y-position errors are corrected by a controlled deflection of the light beam, and that for
the purpose of line-by-line correction of the X-
position errors, the frequence of the read cycle is
modified.

5. Process according to any of claims 1 to 4,
characterized in that the read-out of the image
data is started in each case, at the line start, by
means of a synchronizing start pulse.

6. Process according to any of claims 1 to 4,
characterized in that the corrective deflection is
performed before the line-by-line deflection of
the light beam.

7. Process according to any of claims 1 to 6,
characterized in that a corrective function is generated for each reflector surface by interpolation
from the correction values allocated to the same.

8. Process according to any of claims 1 to 7,
characterized in that a multi-face rotary reflector
(polygon reflector) is utilized as the deflector
system.

9. Process according to any of claims 1 to 8,
characterized
in that for determination of the Y-position errors,
use is made in each case of a photoelectric measuring element comprising two photosensitive
areas placed transversely to the direction of deflection,
and that the photo-currents are integrated, and
the Y-position error is determined by establishing the difference of the integrated photo-currents.

10. Process according to claim 9, characterized
in that a differential photodiode is utilized as the
measuring element.

11. Process according to any of claims 1 to 8,
characterized in that a positional detector comprising a highohmic photosensitive material is utilized as the measuring element.

12. Process according to any of claims 1 to 11,
characterized in that the X-position errors are
determined by measuring the duration differences of the light beam between the measuring
points.

13. Process according to claim 3 or 4, characterized in that an acousto-optical modulator is
utilized for simultaneous intensity-modulation
and deflection of the light beam.

**Revendications**

1. Procédé pour corriger l'erreur de position
d'un faisceau lumineux dévié par point et par
ligne sur une surface par l'intermédiaire d'un
système de déflexion avec au moins une surface
de miroir, et qui se déplace transversalement à la
direction de déflexion par rapport au système de
déflexion, selon lequel on détermine les erreurs
de position et on les corrige par des valeurs de
correction correspondantes, caractérisé
en ce que avant le fonctionnement proprement
dit, on mesure pour chaque surface de miroir un
certain nombre d'erreurs de position dans la direction de déflexion (erreur de position X) et perpendiculairement à celle-ci (erreur de position Y)
en des points de mesure orientés dans la direction des lignes dans la zone de la surface,
en ce que pour corriger les erreurs de position,
on crée des valeurs de correction pour chaque
surface de miroir et on modifie les erreurs de
position tout en vérifiant simultanèment, jusqu'à ce que les erreurs de position soient compensées,
en ce qu'on met en mémoire les valeurs de correction ainsi trouvées,
et en ce que pour la correction en continu au
cours du fonctionnement proprement dit, on
fournit en synchronisme avec le mouvement du
système de déflexion, les valeurs de correction
associées et enregistrées pour les différentes
surfaces de miroir.

2. Procédé selon la revendication 1, caractérisé en ce qu'on corrige les erreurs de position
(X) et les erreurs de position (Y) par des déflexions du faisceau lumineux dépendant des valeurs de correction.

3. Procédé selon la revendication 1, caractérisé
en ce qu'on module l'intensité du faisceau lumineux en fonction d'un signal-image pour l'inscription ligne par ligne sur la surface,
et en ce qu'on corrige les erreurs de position (Y)
par une déflexion commandée du faisceau lumineux et les erreurs de position (X) ligne par ligne
à l'aide d'une modification commandée du
temps de parcours (s'il s'agit du signal-image).

4. Procédé selon la revendication 1, caractérisé
en ce qu'on module l'intensité du faisceau lumineux en fonction de données-image pour l'inscription ligne par ligne sur la surface, données
qui sont lues dans un moyen d'enregistrement à l'aide d'une cadence de lecture,
en ce qu'on modifie les erreurs de position (Y) par une déflexion commandée du faisceau lumineux et en ce que pour corriger ligne par ligne les erreurs de position (X) on modifie la fréquence de la cadence de lecture.

5. Procédé selon l'une des revendications 1 à 4, caractérisé en ce qu'on démarre la lecture des données-image chaque fois à un début de ligne à l'aide d'une impulsion de départ de synchronisation.

6. Procédé selon l'une des revendications 1 à 4, caractérisé en ce qu'on exécute la déflexion de correction avant la déflexion ligne par ligne du faisceau lumineux.

7. Procédé selon l'une des revendications 1 à 6, caractérisé en ce que pour chaque surface-image, on génère une fonction de correction par interpolation à partir des valeurs de correction associées.

8. Procédé selon l'une des revendications 1 à 7, caractérisé en ce qu'on utilise comme système de déflexion un miroir rotatif à facettes multiples (miroir polygonal).

9. Procédé selon l'une des revendications 1 à 8, caractérisé
en ce que pour déterminer les erreurs de position (Y), on utilise chaque fois un organe de mesure photo-électrique ayant deux surfaces photosensibles prévues transversalement à la direction de déflexion
et en ce qu'on intégre les flux de photons et on détermine l'erreur de position (Y) en formant la différence des flux de photons, intégrés.

10. Procédé selon la revendication 9, caractérisé en ce qu'on utilise comme organe de mesure une photodiode différentielle.

11. Procédé selon l'une des revendications 1 à 8, caractérisé en ce qu'on utilise comme organe de mesure un détecteur de position en un matériau photosensible fortement ohmique.

12. Procédé selon l'une des revendications 1 à 11, caractérisé en ce qu'on détermine les erreurs de position (X) par des mesures de différence de temps de parcours du faisceau lumineux entre les points de mesure.

13. Procédé selon l'une des revendications 3 ou 4, caractérisé en ce qu'on utilise un modulateur acoustique-optique pour effectuer simultanément la modulation en intensité et la déflexion du faisceau lumineux.

Fig. 1

0 054 170

0 054 170

Fig. 2

Fig. 3

13

Fig. 4

Fig. 5

0 054 170

Fig. 6

Fig. 7

0 054 170